(19) **Europäisches Patentamt**

**European Patent Office**

**Office européen des brevets**

(11) **EP 1 241 583 A2**

(12) **EUROPÄISCHE PATENTANMELDUNG**

(43) Veröffentlichungstag:
**18.09.2002 Patentblatt 2002/38**

(51) Int Cl.$^7$: **G06F 17/10**

(21) Anmeldenummer: **02005076.1**

(22) Anmeldetag: **06.03.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **16.03.2001 DE 10113296**

(71) Anmelder: **Forschungszentrum Jülich GmbH 52425 Jülich (DE)**

(72) Erfinder:
• **Gast, Werner Dr.
50939 Köln (DE)**

• **Rossewij, Marcus
Woerden, XJ 3445 (NL)**
• **Mihailescu, Luclan
Jülich D-52428 (DE)**
• **Lieder, Rainer.Prof.Dr.
52428 Jülich (DE)**

(74) Vertreter: **Jostarndt, Hans-Dieter
Jostarndt - Thul
Brüsseler Ring 51
52074 Aachen (DE)**

(54) **Verfahren und Vorrichtung zur Analyse von Daten in Datenfolgen**

(57)    Die Erfindung betrifft ein Verfahren und eine Vorrichtung zur Analyse von Daten in Datenfolgen.
Erfindungsgemäß zeichnet sich das Verfahren dadurch aus, dass in einem Bereich von M Datenwerten [X(n-M,...,X(n)] der Datenfolge ein Wert für die Wahrscheinlichkeit P(n>n-1), dass der Wert X(n) größer ist als der Wert X(n-1), ermittelt wird.

Fig. 2

Printed by Jouve, 75001 PARIS (FR)

EP 1 241 583 A2

**Beschreibung**

Die Erfindung betrifft ein Verfahren zur Analyse von Daten in Datenfolgen, die statistischen Schwankungen unterliegen.

Die Erfindung betrifft ferner eine Vorrichtung zur statistischen Analyse von Daten in Datenfolgen.

Die Erfindung betrifft insbesondere eine Vorrichtung zur statistischen Analyse von Daten in endlichen Bereichen von Datenfolgen mit dem Ziel, Bereiche mit steigender, beziehungsweise fallender Tendenz der Datenwerte nachzuweisen.

Es sind verschiedene Verfahren bekannt, um in Datenfolgen Bereiche mit steigender oder fallender Tendenz, beziehungsweise Bereiche aufzufinden, in denen Steigung, beziehungsweise Abfall maximal sind.

Hierbei ist eine Vielzahl von Verfahren zur Unterdrückung von überlagerten statistischen Schwankungen bekannt. Die bekannten Verfahren, beispielsweise Mittelungsverfahren, können jedoch dann nicht eingesetzt werden, wenn die Mittelwerte durch einzelne Datenwerte mit starken Abweichungen, welche außerhalb der statistischen Schwankungen liegen, verfälscht werden.

Der Erfindung liegt die Aufgabe zugrunde, ein Verfahren zu schaffen, durch das Bereiche steigender oder fallender Tendenz in Datenfolgen, insbesondere in solchen, die statistischen Schwankungen unterliegen, ermittelt werden können.

Erfindungsgemäß wird diese Aufgabe dadurch gelöst, dass für jeden Datenwert X(n) aus einem Bereich von M Datenwerten [X(n-M),..., X(n)] im Falle einer steigenden Tendenz ein Wert P(n>) ermittelt wird, welcher der Wahrscheinlichkeit dafür entspricht, dass der Wert X(n) in einem Bereich mit steigender Tendenz der Datenwerte liegt, beziehungsweise im Falle einer fallenden Tendenz ein Wert P(n<), welcher der Wahrscheinlichkeit dafür entspricht, dass der Wert X(n) in einem Bereich mit fallender Tendenz der Datenwerte liegt.

Vorzugsweise wird über alle so ermittelten Werte P(n>), beziehungsweise P(n<) aus dem Bereich [X(n-M),..., X(n)] summiert.

Es ist besonders zweckmäßig, dass die Daten als Datenfolge vorliegen, wobei die Datenfolge vorzugsweise mittelbar oder unmittelbar durch ein Messverfahren ermittelt wird.

Gegenstand der Erfindung ist insbesondere ein Verfahren, das auf dem Gebiet der digitalen Signalverarbeitung zur Triggerung digitalisierter Signale eingesetzt werden kann.

Ein unter Beachtung des Sampling Theorems mit einer bestimmten Frequenz abgetastetes und digitalisiertes analoges Signal stellt eine Folge von diskreten Datenwerten dar, welche den zeitlichen Verlauf der Signalamplitude repräsentiert. Die Signale können regelmäßige Strukturen (periodische Signale) oder zufällig verteilte Pulse (stochastische Signale) enthalten.

Abhängig vom Signal/Rausch Verhältnis und vom Einfluss von Störsignalen unterliegen die Datenwerte starken Schwankungen. Digitale Filter dienen dazu, durch Minimierung dieser Schwankungen die interessanten Signale aus den überlagerten Rausch- und Störsignalen herauszufiltern.

Bei den zufällig auftretenden Pulsen stochastischer Signale muss in der Regel auch der Zeitpunkt ihres Auftretens bestimmt werden. Dies ist Aufgabe des Triggers.

Der Triggerzeitpunkt, das heißt, der Zeitpunkt des Auftretens eines Pulses, den der Trigger bestimmt, sollte möglichst unabhängig von der Amplitude und der detaillierten Form des Pulses sein. Die Sensitivität des Triggers, das heißt, seine Fähigkeit auch Pulse mit kleiner Amplitude relativ zu den Rausch- und Störsignalen zu detektieren, sollte möglichst groß sein.

Die Erfindung sieht insbesondere vor, dass eine statistische Analyse der Daten in einem vorgegebenen, endlichen Bereich der Datenfolge durchgeführt wird, welcher eine Untermenge des gesamten Datensatzes darstellt, und dessen Breite von verschiedenen Faktoren, wie zum Beispiel der Fragestellung, der zu untersuchenden, beziehungsweise zu erwartenden Dauer des Anhaltens der steigenden, beziehungsweise fallenden Tendenzen, und der erforderlichen Unterdrückung von statistischen Schwankungen bestimmt wird.

Die Erfindung nutzt das Prinzip, dass in einem Bereich von M Datenwerten [X(n-M),..,X(n)], der keinerlei steigende, beziehungsweise fallende Tendenz aufweist, sondern nur statistischen Schwankungen unterliegt, die Wahrscheinlichkeit P(n>n-1), dass der Wert X(n) größer ist als der Wert X(n-1), gleich der Wahrscheinlichkeit P(n<n-1) ist, dass der Wert X(n) kleiner ist als der Wert X(n-1):

$$P(n>n-1) = P(n<n-1) = 0.5$$

Dies gilt für jede beliebige Kombination von Wertepaaren [X(n);X(n-j)], [X(n-1);X<n-1-j)] ... [X(n-M-1);X(n-M), die im Bereich der M Datenwerte einer tendenzlosen Datenfolge liegen.

Summiert man über alle Wahrscheinlichkeiten P(n>n-j) und normiert auf die Anzahl der möglichen Kombinationen, so ergibt sich ein Wert, der je nach Breite des Bereichs und damit statistischer Genauigkeit, gegen 0.5 strebt, beziehungsweise mehr oder weniger um 0.5 schwankt, wenn man den Bereich über eine tendenzlose Datenfolge verschiebt. Das Gleiche gilt entsprechend für die Wahrscheinlichkeiten P(n<n-j).

Für Wahrscheinlichkeiten P(n=n-j) dafür, dass ein Wert X(n) gleich einem Wert X(n-j) ist, gelten die Darstellungen entsprechend.

Eine Änderung der Wahrscheinlichkeiten tritt ein, wenn die Datenfolge in bestimmten Bereichen eine Tendenz aufweist, zum Beispiel in der digitalen Signalverarbeitung durch einen Pulsanstieg. In diesem Fall sind die Wahrscheinlichkeiten P(n>n-j) größer als 0.5, denn bei einer steigenden Tendenz der Datenwerte muss die Wahrscheinlichkeit, dass ein Datenwert größer ist als der seiner Vorgänger, zunehmen.

Die Summe über alle Wahrscheinlichkeiten P (n>n-j) normiert auf die Anzahl der möglichen Wertepaare nimmt dann ein Maximum an, wenn alle Datenwerte X(n) auf einem Pulsanstieg liegen, das heißt, wenn der Bereich von M Datenwerten [X(n-M),..,X(n)], in dem die Analyse durchgeführt wird, mit dem Bereich der Datenfolge, der eine steigende Tendenz aufweist, vollständig überlappt.

Das Gleiche gilt entsprechend wieder für die Wahrscheinlichkeiten P(n<n-j) im Falle einer fallenden Tendenz. Auf Grundlage dieser Idee werden Bereiche steigender Tendenz in einer Datenfolge dadurch nachgewiesen, dass anhand einer statistischen Analyse der Daten, die darin besteht, dass für jeden Datenwert X(n) aus einem Bereich [X(n-M),..., X(n)] von M Datenwerten geprüft wird, in wievielen Fällen der Datenwert X(n) größer als der Wert seiner Vorgänger, beziehungsweise kleiner als der Wert seiner Nachfolger in dem Bereich ist, ein Wert P(n>) ermittelt wird, welcher der Wahrscheinlichkeit dafür entspricht, dass der Datenwert X(n) in einem Bereich mit steigender Tendenz der Datenwerte liegt, und dass untersucht wird, für welchen Bereich [X(n-M),..., X(n)] die Summe über die Werte P(n>) aller X(n) aus dem Bereich maximal wird.

Die Werte P(n>), und folglich die Summe über die Werte P(n>) aller X(n) werden erfindungsgemäß nämlich dann maximal, wenn alle X(n) in einem Bereich mit steigender Tendenz der Datenwerte liegen, das heißt, wenn der Bereich

[X(n-M),..., X(n)] mit dem Bereich der Datenfolge, der eine steigende Tendenz der Datenwerte aufweist, vollständig überlappt.

Entsprechend werden Bereiche fallender Tendenz in einer Datenfolge dadurch nachgewiesen, dass anhand einer statistischen Analyse der Daten, die darin besteht, dass für jeden Datenwert X(n) aus einem Bereich [X(n-M),..., X(n)] von M Datenwerten geprüft wird, in wievielen Fällen der Datenwert X(n) kleiner als der Wert seiner Vorgänger, beziehungsweise größer als der Wert seiner Nachfolger in dem Bereich ist, ein Wert P(n<) ermittelt wird, welcher der Wahrscheinlichkeit dafür entspricht, dass der Datenwert X(n) in einem Bereich mit fallender Tendenz der Datenwerte liegt, und dass untersucht wird, für welchen Bereich [X(n-M),..., X(n)] die Summe über die Werte P(n<) aller X(n) aus dem Bereich maximal wird.

Die Werte P(n<), und folglich die Summe über die Werte P(n<) aller X(n) aus dem Bereich werden erfindungsgemäß nämlich dann maximal, wenn alle X(n) in einem Bereich mit fallender Tendenz der Datenwerte liegen, das heißt, wenn der Bereich [X(n-M),..., X(n)] mit dem Bereich der Datenfolge, der eine fallende Tendenz der Datenwerte aufweist, vollständig überlappt.

Lässt man den Bereich, beziehungsweise das Zeitfenster, in dem die statistische Analyse durchgeführt wird, kontinuierlich über die Datenfolge gleiten, so entspricht das in der Terminologie der digitalen Signalverarbeitung einem zeitinvarianten digitalen Filter.

Wegen des Gleitens des Bereichs über die Datenfolge wird nachfolgend für diese besonders bevorzugte Ausführungsform die Bezeichnung MWTA benutzt, wobei diese Bezeichnung zugleich als Abkürzung für den Begriff Moving Window Tendency Analysis steht.

Die Übertragungsfunktion des Filters gibt die Wahrscheinlichkeit wieder, dass der betrachtete Bereich von Datenwerten eine Tendenz aufweist, wie es beispielsweise bei einem Pulsanstieg der Fall ist.

Sie nimmt jedesmal dann Maxima an, wenn maximaler Überlapp mit einem Pulsanstieg besteht. Das bedeutet, die Zeitpunkte für das Auftreten der Maxima korrelieren mit dem Auftreten der Pulsanstiege.

Das Ausgangssignal dieses digitalen Filters kann daher auf einfache Weise zur Definition eines Triggerzeitpunktes genutzt werden, indem die Maxima mit einem digitalen Maximumdetektor detektiert werden.

Gegenüber den Maxima kleinerer Amplitude, die aufgrund der statistischen Schwankungen auftreten, wird durch Vergleich der Amplituden mit einem Schwellenwert mit Hilfe eines digitalen Komparators diskriminiert.

Die dargestellten Maßnahmen können unabhängig voneinander eingesetzt werden, jedoch ist ihre Kombination besonders zweckmäßig, um hierdurch besonders zuverlässig steigende und/oder fallende Tendenzen in vorgegebenen Bereichen eines Datensatzes zu ermitteln.

Dabei ist das Ergebnis völlig unabhängig vom absoluten Wert der einzelnen Daten, da ausschließlich Werte für Wahrscheinlichkeiten anstelle von Datenwerten eingehen.

Aus dem gleichen Grund ist es weitgehend unabhängig vom detaillierten Verlauf der Tendenzen und unempfindlich gegenüber starken, außerhalb statistischer Schwankungen liegenden Abweichungen einzelner Datenwerte.

Das Verfahren gewährleistet eine gute Unterdrückung statistischer Schwankungen, da über viele Werte für Wahrscheinlichkeiten aus dem betrachteten Bereich, die eine bestimmte Tendenz repräsentieren, summiert wird, so dass sich die aus lokalen statistischen Schwankungen ergebenden, gegenläufigen Tendenzen kompensieren.

Weiterhin ist die erfindungsgemäß auf Basis des neuentwickelten Verfahrens der statistischen Datenanalyse entwickelte Vorrichtung geeignet, auf dem Gebiet der digitalen Signalverarbeitung zur Triggerung digitalisierter Signale eingesetzt zu werden.

Die Vorrichtung besteht aus einem Modul zur statistischen Analyse von Daten in einem über eine Datenfolge gleitenden Fenster. Das Modul stellt vorzugsweise einen zeitinvarianten, digitalen Filter dar, dessen Übertragungseigenschaften eine Wahrscheinlichkeitsfunktion ergeben, welche aus einer Folge von diskreten Werten besteht, die der Wahrscheinlichkeit dafür entsprechen, dass in dem Fenster ein Pulsanstieg, beziehungsweise ein Pulsabfall vorliegt. Mit jeder Verschiebung des Fensters um ein Abtastintervall ergibt sich ein neuer Wert für die Wahrscheinlichkeit.

Die Maxima dieser diskreten Wahrscheinlichkeitsfunktion korrelieren mit dem Auftreten von Pulsanstiegen, beziehungsweise Pulsabfällen. Die Korrelation, und damit die Genauigkeit des Triggerzeitpunktes, ist dann maximal, wenn die Breite des Fensters der Dauer des Pulsanstiegs, beziehungsweise des Pulsabfalls entspricht.

Der Ausgang dieses unkonventionellen, digitalen Filters ist über ein Modul zur gleitenden Mittelwertbildung zur Zusammenfassung und Glättung des Signals mit einem digitalen Modul zur gleitenden Maximumdetektion verbunden, in welches ein digitaler Komparator integriert ist, der sicherstellt, dass nur dann ein Triggersignal generiert wird, wenn die Amplitude des durch den Maximumdetektor detektierten Maximums einen vorgegebenen Schwellenwert überschreitet.

Die Amplituden der Maxima hängen nicht von der Pulsamplitude, sondern lediglich vom Signal-Rausch-Verhältnis ab. Vorzugsweise ist der digitale Trigger daher weitgehend unabhängig von der Amplitude des Pulses und der detaillierten Form des Pulsanstiegs, beziehungsweise des Pulsabfalls.

Der digitale Trigger weist erfindungsgemäß eine große Sensitivität auf, da die Breite des Fensters, welche gewissermaßen als Bandbreite des digitalen Filters betrachtet werden kann, genau auf die Frequenz des Pulanstiegs, beziehungsweise Pulsabfalls abgestimmt werden kann, und weil der durch das MWTA-Modul realisierte digitale Filter eine gute Unterdrückung statistischer Schwankungen, das heißt, eine gute Rauschunterdrückung, gewährleistet.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Zeichnungen.

Fig. 1: Schematische Darstellung des Signals eines Ge-Halbleiterdetektors am Ausgang des Vorverstärkers, welches von einem Abtast-Analog-Digital-Umwandler mit einer Abtastrate von 25 MSPS digitalisiert wird. Die Abtastwerte sind mit X(n) bezeichnet. Die Länge eines Abtastintervalls beträgt 40ns, die Anstiegszeit des Pulses 320ns, das heißt, 8 Abtastintervalle.

Fig. 2: Blockschaltbild der gesamten Schaltungsanordnung zur Triggerung digitalisierter Signale.

Fig. 3: Blockschaltbild des Moduls zur Tendenzanalyse in einem über eine Datenfolge gleitenden Fenster (MWTA: Moving Window Tendency Analysis).

Fig. 4: Blockschaltbild des Moduls zur Mittelwertbildung in einem über eine Datenfolge gleitenden Fenster (MAU: Moving Average Unit).

Fig. 5: Blockschaltbild des digitalen Maximumdetektors (MAXD: Maximum Detector).

Im Folgenden wird eine besonders bevorzugte Ausführungsform der Vorrichtung zur Triggerung digitalisierter Signale anhand eines konkreten Beispiels beschrieben. Es wird das Signal eines Ge-Halbleiterdetektors am Ausgang des Vorverstärkers betrachtet, welches von einem Abtast-Analog-Digital-Umwandler (ADU) mit einer Abtastrate von 25 MSPS digitalisiert wird. Dieses Signal ist durch Pulse mit einen steilen Anstieg (Anstiegzeit ca. 320ns) und einem langsamen Abfall (Abfallszeit ca. 50000ns) gekennzeichnet.

Die Erfindung ist jedoch nicht auf dieses spezielle Anwendungsgebiet dargestellt, da die erfindungsgemäßen Prinzipien auf andere Datensätze gleichfalls angewendet werden können.

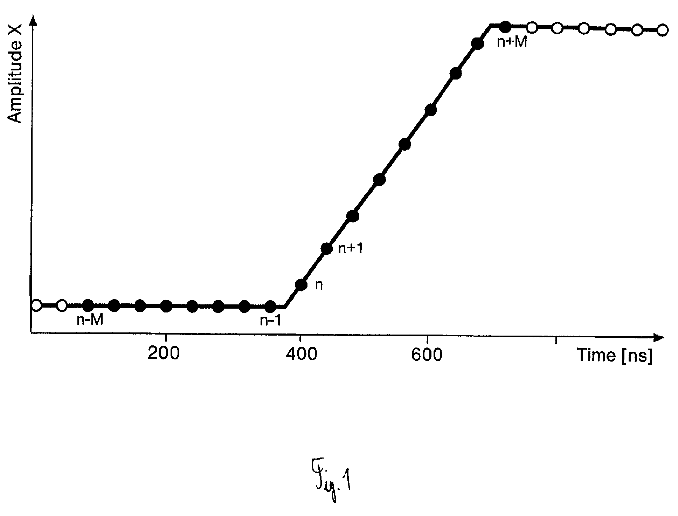

Wie in Fig. 1 dargestellt, werden die Abtastwerte mit X(n) bezeichnet. Die Anstiegszeit der Pulse beträgt M = 8 Abtastintervalle. Da es sich in diesem Beispiel um stufenförmige Pulse handelt, und die Triggerung bevorzugt auf den Beginn des Pulsanstiegs erfolgen sollte, beträgt die optimale Breite des Fensters, in dem die statistische Analyse durchgeführt wird, 2M Abtastintervalle, das heißt es enthält 2M+1 = 17 Abtastwerte.

In der beispielhaft beschriebenen Vorrichtung zur Triggerung digitalisierter Signale gemäß der Erfindung, im Folgenden kurz digitaler Trigger genannt, wird die kontinuierliche Folge von Abtastwerten des Abtast-Analog-Digital-Umwandlers (ADU) zunächst in ein Modul zur statistischen Analyse von Daten in einem über eine Datenfolge gleitendem Fenster (MWTA-Modul) eingelesen, dessen Breite vorzugsweise einstellbar ist.

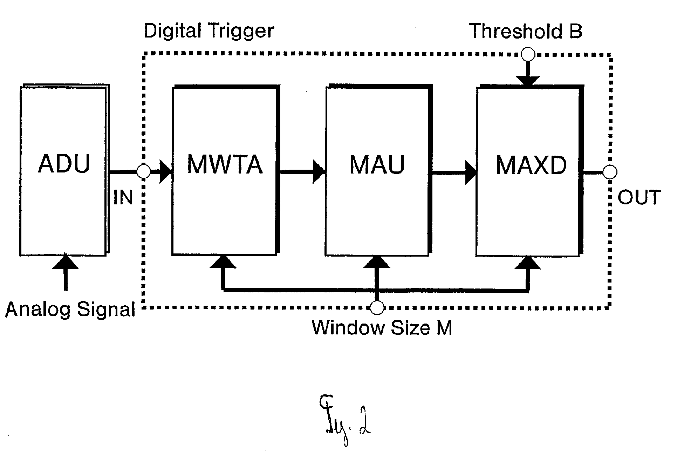

Dazu ist, wie in Fig. 2 dargestellt, der Ausgang des Abtast-Analog-Digital-Umwandlers (ADU) mit dem Eingang des MWTA-Moduls verbunden.

Das MWTA-Modul wandelt erfindungsgemäß die Folge von Abtastwerten des ADU anhand einer statistischen Analyse in eine Folge von diskreten Werten um, welche der Wahrscheinlichkeit dafür entsprechen, dass in dem vorgegebenen Fenster ein Pulsanstieg, beziehungsweise ein Pulsabfall vorliegt. Diese diskrete Wahrscheinlichkeitsfunktion nimmt Maxima ein, wenn das Fenster einen Pulsanstieg, beziehungweise einen Pulsabfall vollständig überlappt.

Zur Zusammenfassung und Glättung der Ausgangsdaten des MWTA-Moduls werden diese anschließend in ein Modul zur gleitenden Mittelwertbildung (MAU) eingelesen, wobei die Breite des Fensters, über das die Mittelung durchgeführt wird, ebenfalls einstellbar ist und vorzugsweise der Breite des für das MWTA-Modul gewählten Fensters entspricht.

Dazu ist, wie in Fig. 2 dargestellt, der Ausgang des MWTA-Moduls mit dem Eingang des MAU-Moduls verbunden. Um die mit jedem Pulsanstieg, beziehungsweise jedem Pulsabfall korrelierten Maxima der durch das MWTA-Modul generierten und durch das MAU-Modul geglätteten Wahrscheinlichkeitsfunktion zu detektieren, wird das Ausgangssignal des MAU-Moduls in einen digitalen Maximumdetektor (MAXD) eingelesen, in welchen ein vorzugsweise einstellbarer, digitaler Komparator integriert ist, und der ein Triggersignal generiert, sobald ein Maximum erreicht wird und die Amplitude des Maximums den am Komparator eingestellten Schwellenwert überschreitet.

Dazu ist, wie in Fig. 2 dargestellt, der Ausgang des MAU-Moduls mit dem Eingang des digitalen Maximumdetektors (MAXD) verbunden.

Der Ausgang des in den digitalen Maximumdetektor (MAXD) integrierten Komparators stellt gleichzeitig den Ausgang des gesamten digitalen Triggers dar.

Bevorzugte Verfahrensschritte, um die im MWTA-Modul zur Erzeugung einer Folge von diskreten Werten der Wahrscheinlichkeit für das Vorhandensein eines Pulsanstiegs erforderliche statistische Analyse durchzuführen, beinhalten, dass für jeden neuen Satz von sich innerhalb des vorgegebenen Fensters der Breite von 2M Abtastintervallen befindenden Abtastwert, der sich aus der Verschiebung des Fensters über die kontinuierliche Folge von Abtastwerten des ADU um ein Abtastintervall ergibt, geprüft wird, in wieviel Fällen der Wert des Abtastwertes X(n) aus der Mitte des Fensters größer als der eines seiner M Vorgänger und nicht größer als der eines seiner M Nachfolger ist.

Dies wird durch eine geeignete Verschaltung von Komparatoren, Verzögerungseinheiten und Invertern erreicht. Die Anzahl der in einem 2M-fach Akkumulator aufsummierten positiven Resultate repräsentiert die Wahrscheinlichkeit, dass der Abtastwert X(n) auf einem Signalanstieg liegt, und sie wird maximal, wenn das Fenster einen Pulsanstieg vollständig überlappt.

Der Ausgang des Akkumulators stellt gleichzeitig den Ausgang des MWTA-Moduls dar.

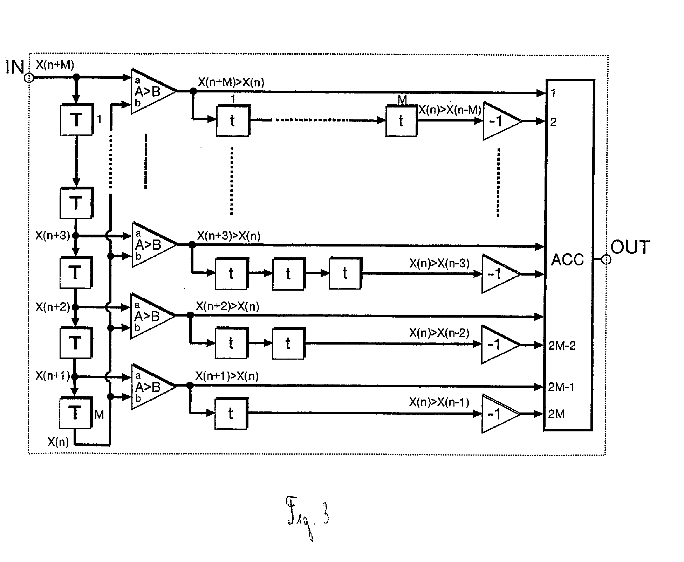

Fig. 3 zeigt beispielhaft eine bevorzugte Ausführungsform des MWTA-Moduls, welche sich dadurch auszeichnet, dass diskrete Logikbauelemente der digitalen Elektronik oder Programmierbare Logikbausteine (PLD) verwendet werden, in die entsprechende Komponenten integriert sind.

Alternativ können äquivalente Funktionen als Softwarealgorithmen auf einem digitalen Signalprozessor (DSP) oder Microprozessor implementiert werden.

Im Einzelnen sind dies: M einstufige Verzögerungseinheiten (T) mit einer für Abtastwerte des ADU ausreichenden Wortbreite, M Komparatoren (A>B) mit der gleichen Wortbreite, M(M+1)/2 einstufige Verzögerungseinheit (t) mit einer Wortbreite von 1bit, M Inverter (-1) und ein 2M-fach Akkumulator (ACC).

Die Zahl 2M in Einheiten eines Abtastintervalls entspricht der maximalen Breite des Fensters, in welchem die statistische Analyse durchgeführt werden kann, und sollte daher größer/gleich der maximal erwarteten Pulsanstiegszeit sein.

Der Eingang des MWPA-Moduls ist gleichzeitig verbunden mit dem Eingang a eines ersten Komparators (A>B) einer Reihe von M parallelgeschalteten Komparatoren (A>B) und dem Eingang der ersten einstufigen Verzögerungseinheit (T) aus einer Kette von M hintereinandergeschalteten einstufigen Verzögerungseinheiten (T) mit einer für die Abtastwerte des ADU ausreichenden Wortbreite.

Der Ausgang der ersten Verzögerungseinheit (T) ist gleichzeitig mit dem Eingang der zweiten Verzögerungseinheit (T) der Kette von M Verzögerungseinheiten (T) und dem Eingang a des zweiten Komparators (A>B) verbunden.

Auf gleiche Weise sind, bis auf die letzte Einheit der Kette, alle Ausgänge der restlichen Verzögerungseinheiten (T) der Kette gleichzeitig mit dem Eingang ihres Nachfolgers und mit dem Eingang a eines jeweiligen Komparators (A>B), ausgenommen des ersten, verbunden.

Der Ausgang der letzen Verzögerungseinheit (T) ist gleichzeitig mit den Eingängen b aller M Komparatoren (A>B) verbunden.

Der logische Ausgang (TRUE=1, FALSE=0) des ersten Komparators (A>B) ist gleichzeitig direkt mit einem ersten der 2M Eingänge des 2M-fach Akkumulators (ACC) verbunden und indirekt über eine Kette von M einstufigen Verzögerungseinheiten (t) mit einer Wortbreite von 1bit und einen Inverter (-1) mit einem zweiten Eingang des Akkumulators (ACC).

Der logische Ausgang des zweiten Komparators (A>B) ist gleichzeitig direkt mit einem dritten der 2M Eingänge des 2M-fach Akkumulators (ACC) verbunden und indirekt über eine Kette von M-1 Verzögerungseinheiten (t) mit einer Wortbreite von 1bit und einen Inverter (-1) mit einem vierten Eingang des Akkumulators (ACC).

Auf gleiche Weise sind die Ausgänge aller weiteren Komparatoren (A>B) gleichzeitig direkt mit weiteren Eingängen des Akkumulators (ACC) und indirekt über eine stetig kürzer werdende Kette von Verzögerungseinheiten (t) und jeweils einen Inverter (-1) mit anderen Eingängen des Akkumulators (ACC) verbunden.

Der logische Ausgang des letzten Komparators (A>B) ist gleichzeitig direkt mit einem vorletzten Eingang des Akkumulators (ACC) und indirekt über eine einstufige Verzögerungseinheit (t) und einen Inverter (-1) mit dem letzten Eingang des Akkumulators (ACC) verbunden.

Der Ausgang des Akkumulators (ACC) stellt gleichzeitig den Ausgang des MWTA-Moduls dar.

Bevorzugte Verfahrensschritte, um im MAU-Modul durch gleitende Mittelung aus der Folge von diskreten Wahrscheinlichkeitswerten aus dem MWPA-Modul eine neue Folge gemittelter Werte zu erzeugen, beinhalten für den Fachmann in digitaler Signalverarbeitung geläufige Techniken, und bestehen im konkreten Fall darin, dass für jeden neuen Satz von sich innerhalb des vorgegebenen Fensters der Breite von 2M Abtastintervallen befindenden 2M+1 Werten für die Wahrscheinlichkeit des Vorliegens eines Pulsanstiegs, der sich aus der Verschiebung des Fensters über die kontinuierliche Folge von Wahrscheilichkeitswerten des MWPA-Moduls um jeweils ein Abtastintervall ergibt, die 2M+1 Wahrscheinlichkeitswerte aufsummiert und durch ihre Anzahl dividiert werden.

Dazu werden eine Verzögerungseinheit, ein Subtrahierer, ein Multiplizierer und ein Akkumulator geeignet verschaltet. Durch die gleitende Mittelung ergibt sich eine für die Bestimmung des Triggerzeitpunktes und die Sensivität des digitalen Triggers vorteilhafte Verbesserung des Signal/Rausch Verhältnisses.

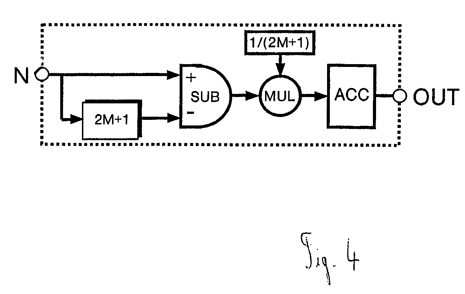

Fig. 4 zeigt beispielhaft eine bevorzugte Ausführungsform des MAU-Moduls, welche sich dadurch auszeichnet, dass diskrete Logikbauelemente der digitalen Elektronik oder Programmierbare Logikbausteine (PLD) verwendet werden, in die entsprechende Komponenten integriert sind.

Alternativ können äquivalente Funktionen als Softwarealgorithmen auf einem digitalen Signalprozessor (DSP) oder Microprozessor implementiert werden.

Im Einzelnen sind dies: eine 2M+1 stufige Verzögerungseinheit (T) mit einer für die maximalen Werte der Wahrscheinlichkeiten P(n) aus dem MWPA-Modul ausreichenden Wortbreite, ein entsprechender Subtrahierer (SUB), ein Multiplizierer (MUL) mit dem konstanten Multiplikator 1/(2M+1) und ein Akkumulator (ACC).

Die Zahl 2M+1 entspricht der maximalen Zahl von diskreten Wahrscheinlichkeitswerten, über die eine Mittelung durchgeführt werden kann, und sollte daher der maximalen Zahl von Wahrscheinlichkeitswerten, die in dem vom MWPA-Modul vorgegebenen Fenster liegen können, entsprechen.

Der Eingang des MAU-Moduls ist sowohl direkt mit dem positiven Eingang als auch indirekt über die 2M+1 stufige Verzögerungseinheit (T) mit dem negativen Eingang des Subtrahierers (SUB) verbunden. Der Ausgang des Subtrahierers (SUB) wird über den Multiplizierer (MUL) dem Eingang des Akkumulators (ACC) zugeführt. Der Ausgang des Akkumulators (ACC)stellt gleichzeitig den Ausgang des MAU-Moduls dar.

Bevorzugte Verfahrensschritte, um im digitalen Maximumdetektor (MAXD) aus der vom MWPA-Modul erzeugten und vom MAU-Modul geglätteten Folge von diskreten Wahrscheinlichkeitswerten ein Signal zu extrahieren, welches die Existenz und den Zeitpunkt des Auftretens eines absoluten Maximums in einem vorgegebenen Bereich von 2M Abtastintervallen dieser Folge von Werten wiedergibt, beinhalten, dass für jeden neuen Satz von sich innerhalb des vorgegebenen Fensters der Breite von 2M Abtastintervallen befindenden, geglätteten Wahrscheinlichkeitswerten, der sich aus der Verschiebung des Fensters über die kontinuierliche Folge von geglätteten Wahrscheinlichkeitswerten aus dem MAU-Modul um ein Abtastintervall ergibt, geprüft wird, in wieviel Fällen der Wert der Wahrscheinlichkeit P(n) aus der Mitte des Fensters größer/gleich dem Wahrscheinlichkeitswert eines seiner M Vorgänger und ebenfalls größer/gleich dem eines seiner M Nachfolger ist.

Dies wird durch eine geeignete Verschaltung von Komparatoren, Verzögerungseinheiten und logischen Invertern erreicht.

Die sich aus jeder Verschiebung des Fensters neu ergebende Anzahl der in einem 2M-fach Summierer aufsummierten positiven Resultate ergibt eine neue Folge von Werten, wobei jeder einzelne Wert angibt, wieviele der Wahrscheinlichkeitswerte innerhalb des Fensters kleiner/gleich dem Wert der Wahrscheinlichkeit P(n) sind.

Sie nimmt genau dann den Maximalwert 2M an, wenn alle übrigen Wahrscheinlichkeitswerte aus dem betrachteten Bereich kleiner/gleich dem Wert der Wahrscheinlichkeit P(n) sind, das heißt, wenn P(n) einem absoluten Maximum entspricht.

Mit einem Komparator, der auf den Wert 2M-1 eingestellt ist, wird bei Erreichen des Maximums ein Signal generiert.

Dieses Signal wird zusammen mit dem Ausgang eines weiteren Komparators, der gleichzeitig den absoluten Wert der Wahrscheinlichkeit P(n) des detektierten absoluten Maximums mit einem von außen vorgegebenen Schwellenwert vergleicht, einem logischen UND zugeführt, so dass nur dann ein Signal generiert wird, wenn beide Schwellen überschritten werden.

Der Ausgang des logischen UND stellt gleichzeitig den Ausgang des MAXD-Moduls und des gesamten digitalen Triggers dar.

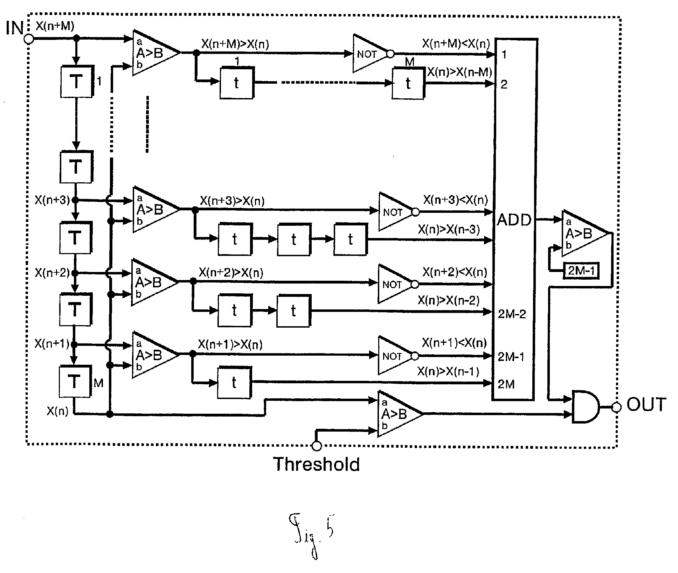

Fig. 5 zeigt beispielhaft eine bevorzugte Ausführungsform des digitalen Maximumdetektors MAXD, welche sich dadurch auszeichnet, dass diskrete Logikbauelemente der digitalen Elektronik oder Programmierbare Logikbausteine (PLD) verwendet werden, in die entsprechende Komponenten integriert sind.

Alternativ können äquivalente Funktionen als Softwarealgorithmen auf einem digitalen Signalprozessor (DSP) oder Microprozessor implementiert werden.

Insbesondere sind dies: M einstufige Verzögerungseinheiten (T) mit einer für die vom MWPA-Modul generierten und vom MAU-Modul gefilterten Wahrscheinlichkeitswerte ausreichenden Wortbreite, M+1 Komparatoren (A>B) mit der gleichen Wortbreite, M (M+1)/2 einstufige Verzögerungseinheit (t) mit einer Wortbreite von 1bit, M logische Inverter (NOT), ein 2M-fach Addierer (ADD) und ein Komparator (A>2M-1) mit einer für den maximalen Wert von 2M ausreichenden Wortbreite.

Der Eingang des MAXD-Moduls ist gleichzeitig mit dem Eingang a eines ersten Komparators (A>B) einer Reihe von M parallelgeschalteten Komparatoren (A>B) und dem Eingang der ersten einstufigen Verzögerungseinheit (T) aus einer Kette von M hintereinandergeschalteten einstufigen Verzögerungseinheiten (T) mit einer für die Abtastwerte des ADU ausreichenden Wortbreite verbunden.

Der Ausgang der ersten Verzögerungseinheit (T) ist gleichzeitig mit dem Eingang der zweiten Verzögerungseinheit (T) der Kette von M Verzögerungseinheiten (T) und dem Eingang a des zweiten Komparators (A>B) verbunden.

Auf gleiche Weise sind, bis auf die letzte Einheit der Kette, alle Ausgänge der restlichen Verzögerungseinheiten (T) der Kette gleichzeitig mit dem Eingang ihres Nachfolgers und mit dem Eingang a eines jeweiligen Komparators (A>B), ausgenommen des ersten, verbunden.

Der Ausgang der letzen Verzögerungseinheit (T) ist gleichzeitig mit den Eingängen b aller M Komparatoren (A>B) und dem Eingang a eines Komparators (A>B) mit einstellbarer Schwelle B verbunden.

Der logische Ausgang (TRUE=1, FALSE=0) des ersten Komparators (A>B) ist gleichzeitig direkt über einem logischen Inverter (NOT) mit einem ersten der 2M Eingänge des 2M-fach Addierers (ADD) und indirekt über eine Kette von M einstufigen Verzögerungseinheiten (t) mit einer Wortbreite von 1bit und mit einem zweiten Eingang des Addierers (ADD) verbunden.

Der logische Ausgang des zweiten Komparators (A>B) ist gleichzeitig direkt über einem logischen Inverter (NOT) mit einem dritten der 2M Eingänge des 2M-fach Addierers (ADD) und indirekt über eine Kette von M-1 Verzögerungseinheiten (t) mit einer Wortbreite von 1bit mit einem vierten Eingang des Addierers (ADD) verbunden.

Auf gleiche Weise sind die Ausgänge aller weiteren Komparatoren (A>B) gleichzeitig direkt über logische Inverter (NOT) mit weiteren Eingängen des Addierers (ADD) und indirekt über eine stetig kürzer werdende Kette von Verzögerungseinheiten (t) mit anderen Eingängen des Addierers (ADD) verbunden.

Der logische Ausgang des letzten Komparators (A>B) ist gleichzeitig direkt über einem logischen Inverter (NOT) mit einem vorletzten Eingang des Addierers (ADD) und indirekt über eine einstufige Verzögerungseinheit (t) mit dem letzten Eingang des Addierers (ADD) verbunden.

Der Ausgang des Addierers (ADD) ist nit dem Eingang des Komparators (A>2M-1) verbunden.

Der Ausgang des Komparators (A>2M-1) und der Ausgang des Komparators (A>B) mit einstellbarer Schwelle B sind über ein logisches UND miteinander verknüpft.

Der Ausgang des logischen UND stellt den Ausgang des digitalen Maximumdetektors (MAXD) und gleichzeitig den Ausgang der gesamten Vorrichtung zur Triggerung digitalisierter Signale dar.

Die dargestellten Schaltungsbeispiele ermöglichen eine besonders zweckmäßige Implementierung der Erfindung. Die Erfindung ist jedoch nicht auf die dargestellten Beispiele beschränkt. Insbesondere lässt sich die Erfindung auch mit anderen Bauelementen ausführen, welche äquivalente logische Funktionen aufweisen.

**Patentansprüche**

1. Verfahren zur Auswertung von Daten in Datenfolgen, die statistischen Schwankungen unterliegen, **dadurch gekennzeichnet, dass** in einem Bereich von M Datenwerten [X(n-M,...,X(n)] der Datenfolge ein Wert für die Wahrscheinlichkeit P(n>n-1), dass der Wert X(n) größer ist als der Wert X(n-1), ermittelt wird.

2. Verfahren nach Anspruch 1, **dadurch gekennzeichnet, dass** ein Wert für die Wahrscheinlichkeit P(n>n-j) für Kombinationen von Wertepaaren [X(n); X(n-j)], die im Bereich der M Datenwerte der Datenfolge liegen, ermittelt wird, wobei j Werte zwischen 1 und M annehmen kann.

3. Verfahren nach einem oder mehreren der vorangegangenen Ansprüche, **dadurch gekennzeichnet, dass** ein Bereich der Datenfolge, in welchem die Datenwerte eine steigende Tendenz aufweisen, dadurch ermittelt wird, indem untersucht wird, ob die Summe über alle betrachteten Werte für die Wahrscheinlichkeit P(n>nj) normiert auf ihre Anzahl ein Maximum annimmt, wenn die Untersuchung in dem Bereich der M Datenwerte [X(n-M),...,X(n)] durchgeführt wird.

4. Verfahren nach einem oder mehreren der vorangegangenen Ansprüche, **dadurch gekennzeichnet, dass** ein Bereich der Datenfolge, in welchem die Datenwerte eine fallende Tendenz aufweisen, dadurch ermittelt wird, indem untersucht wird, ob die Summe über alle betrachteten Werte für die Wahrscheinlichkeit P(n<nj) normiert auf ihre Anzahl ein Maximum annimmt, wenn die Untersuchung in dem Bereich der M Datenwerte [X(n-M),...,X(n)] durchgeführt wird.

5. Verfahren nach einem oder mehreren der vorangegangenen Ansprüche, **dadurch gekennzeichnet, dass** die Untersuchung in einem über die Datenfolge gleitenden Fenster durchgeführt wird.

6. Verfahren nach Anspruch 5, **dadurch gekennzeichnet, dass** eine zeitinvariante digitale Filterung der Daten erfolgt, deren Übertragungseigenschaften darin bestehen, die Folge diskreter Datenwerte X(n) in eine Folge diskreter Werte der Wahrscheinlichkeit dafür umzuwandeln, dass in dem Fenster eine ansteigende oder abfallende Tendenz der Datenwerte vorliegt.

**7.** Verfahren zur Triggerung digitalisierter Signale, **dadurch gekennzeichnet, dass** ein Puls, auf den der Trigger ansprechen soll, dadurch ermittelt wird, dass durch eine statistische Analyse der Datenwerte die Wahrscheinlichkeit für das Vorhandensein eines Pulsanstiegs und/oder eines Pulsabfalls ermittelt wird.

**8.** Verfahren nach Anspruch 7, **dadurch gekennzeichnet, dass** eine zeitinvariante digitale Filterung der digitalisierten Signale erfolgt, wobei ein Zeitfenster, in dem eine statistische Analyse zur Ermittlung der Wahrscheinlichkeit für das Vorhandensein eines Pulsanstiegs und/oder eines Pulsabfalls durchgeführt wird, über die Datenfolge von Abtastwerten des digitalisierten Signals gleitet, so dass mit jeder Verschiebung des Zeitfensters um ein Abtastintervall ein neuer Wert für die Wahrscheinlichkeit des Vorhandenseins eines Pulsanstiegs und/oder eines Pulsabfalls erzeugt wird.

**9.** Verfahren nach Anspruch 8, **dadurch gekennzeichnet, dass** die Bandbreite des digitalen Filters optimiert wird, indem die Breite des Fensters, in welchem die statistische Analyse durchgeführt wird, auf die zweifache Dauer eines Pulsanstiegs und/oder eines Pulsabfalls eingestellt wird.

**10.** Verfahren nach einem der beiden Ansprüche 7 bis 9, **dadurch gekennzeichnet, dass** der Triggerzeitpunkt dadurch ermittelt wird, dass das Fenster für die statistische Analyse so variiert wird, bis es einer Dauer eines Pulsanstiegs oder einer Dauer eines Pulsabfalls entspricht.

**11.** Verfahren nach einem oder mehreren der Ansprüche 7 bis 10, **dadurch gekennnzeichnet,** dass nur dann ein Triggersignal generiert wird, wenn eine Amplitude eines detektierten Maximums einen vorgegebenen Schwellenwert überschreitet.

**12.** Modul (MWTA) zur statistischen Analyse von Daten, **dadurch gekennzeichnet, dass** das Modul Mittel zur Auswahl von Daten in einem über eine Datenfolge gleitenden Fenster enthält, und dass das Modul einen digitalen Filter darstellt, dessen Übertragungseigenschaften darin bestehen, die Folge diskreter Datenwerte X(n) in eine Folge diskreter Werte der Wahrscheinlichkeit dafür umzuwandeln, dass ein Pulsanstieg oder ein Pulsabfall in dem Fenster vorliegt.

**13.** Modul nach Anspruch 12, **dadurch gekennzeichnet, dass** es einstufige Verzögerungseinheiten (T) mit einer für Abtastwerte eines Analog-Digital-Umwandlers (ADU) ausreichenden Wortbreite, Komparatoren (A>B) mit der gleichen Wortbreite, ein- oder mehrstufige Verzögerungseinheiten (t) mit einer Wortbreite von 1bit, Inverter (-1) und einen Akkumulator (ACC) enthält.

**14.** Modul nach Anspruch 13, **dadurch gekennzeichnet, dass** die Anzahl der Verzögerungseinheiten (T) M beträgt.

**15.** Modul nach einem oder mehreren der Ansprüche 13 oder 14, **dadurch gekennzeichnet, dass** es M Komparatoren enthält, wobei 2M in Einheiten eines Abtastintervalls der maximalen Breite eines Fensters entspricht, in dem eine statistische Analyse durchgeführt werden kann.

**16.** Modul nach einem oder mehreren der Ansprüche 12 bis 15, **dadurch gekennzeichnet, dass** es mit einem Ausgang eines Abtast-Analog-Digital-Umwandlers (ADU) verbunden ist.

**17.** Modul nach einem oder mehreren der Ansprüche 12 bis 16, **dadurch gekennzeichnet, dass** ein Ausgang des Moduls mit einem digitalen Maximumdetektor und einem digitalen Komparator verbunden ist, wobei der digitale Komparator durch einen Vergleich zwischen einer Amplitude eines durch den Maximumdetektor detektierten Maximums und eines vorgegebenen Schwellenwertes bewirkt, dass ein Triggersignal nur dann erzeugt wird, wenn die Amplitude des Maximums den Schwellenwert überschreitet.

Fig. 1

Digital Trigger

Threshold B

ADU

IN

Analog Signal

MWTA

MAU

MAXD

OUT

Window Size M

Fig. 2

Fig. 3

Fig. 4

Fig. 5